# EUROPEAN PATENT SPECIFICATION

(11) **EP 3 141 422 B1**
(45) Date of publication and mention of the grant of the patent: **05.09.2018**
(21) Application number: 16188166.9
(22) Date of filing: 09.09.2016
(51) Int. Cl.: B60P 1/64

(54) **A SLIDING BOGIE TRAILER**
GLEITDREHGESTELLANHÄNGER
REMORQUE DE BOGIE COULISSANTE

(30) Priority: 09.09.2015 GB 201515995; 02.09.2016 EP 16187145
(43) Date of publication of application: 15.03.2017
(73) Proprietor: Dennison Trailers Limited, County Kildare (IE)
(72) Inventor: DENNISON, David, Sallins, County Kildare (IE); LAMBE, Ronan, County Kildare (IE)
(74) Representative: Schütte, Gearoid

(56) References cited:
- EP-A2- 1 486 375
- EP-A2- 2 090 462
- GB-A- 2 409 852

## Description

### Introduction

This invention relates to semi-trailers and in particular to a sliding bogie trailer or a sliding skeletal trailer as such length adjustable semi-trailers are sometimes called. Document EP 1 486 375 A2 discloses the preamble of claim 1. The invention particularly relates to a sliding bogie trailer of the type comprising a front trailer part and an associated rear trailer part on wheels which are slidably interconnected for adjustment between a collapsed position and an extended position to allow carriage of container boxes of different sizes on the trailer. Examples of such length adjustable semi-trailers are described in EP 2 090 462 A2 and GB 2 335 891. Generally, each container is supported and secured on the trailer by a number of spaced-apart bolster assemblies comprising laterally extending arms on a chassis of the trailer carrying container locks thereon. Typically, a bolster assembly is provided at a rear end of the front trailer part. In the collapsed position, this bolster assembly locates rearwardly of the rearmost wheels on the rear trailer part, whilst in the extended position, the bolster assembly locates in front of the rearmost wheels on the rear trailer part. To allow the bolster assembly to pass the wheels when the trailer parts move between the collapsed and extended positions, this bolster assembly may be mounted above the wheels so it freely passes the wheels. However, such a relatively high mount on the trailer may cause difficulty with height clearance for containers carried on the trailer in respect of bridges, tunnels and the like, and such a high mount is also less stable. In Europe currently there is a maximum height restriction of four metres. Therefore, it is generally desirable to mount a container as low as possible on the trailer. However, a relatively low mount would cause the bolster assembly at the rear of the front trailer part to interfere with the wheels when extending and collapsing the trailer.

The present invention is directed towards overcoming this problem.

### Summary of the Invention

According to the invention, there is provided a sliding bogie trailer, having:
a front trailer part and a complementary rear trailer part which are slidably interconnected for movement between a collapsed position and an extended position,
the front trailer part having means for attachment to a tractor vehicle for towing the trailer,
a bolster assembly for mounting a container on the trailer at a rear end of the front trailer part,
the rear trailer part being telescopically movable relative to the front trailer part and mounted on at least one axle with ground engaging wheels,
a bottom of the bolster assembly locating below a top of the wheels when the trailer is in the collapsed position and when the trailer is in the extended position, the bolster assembly locating rearwardly of the wheels when the trailer parts are in the collapsed position and the bolster assembly locating forwardly of the wheels when the trailer parts are in the extended position,
characterised in that there is provided an elevator to lift the bolster over the wheels for location either rearwardly or forwardly of the wheels.

In one embodiment of the invention, the elevator is operable in response to movement of the trailer parts between the collapsed and extended positions.

In another embodiment, the elevator is operable for vertical displacement of the rear end of the front trailer part on the rear trailer part as said trailer parts move between the collapsed and extended positions.

In another embodiment, the elevator comprises a ramp on one trailer part which is engagable by the other trailer part.

In another embodiment, the elevator comprises a ramp on the rear trailer part which is engagable by the front trailer part.

In another embodiment, the elevator comprises a roller on the other trailer part which is engagable with the ramp.

In another embodiment, the roller is mounted on the bolster assembly.

In another embodiment, the roller is centrally mounted on the bolster assembly.

In a preferred embodiment, the rear trailer part comprises a pair of spaced-apart substantially parallel longitudinal I-beams interconnected by cross members extending therebetween, rollers on the front trailer part engaging and running along top faces of upper flanges of said I-beams for slidably interconnecting the front and rear trailer parts, a ramp projecting upwardly from the top face of each I-beam intermediate the ends thereof, each ramp having a raised central portion connected by front and rear sloped faces with the top face of the I-beam, said central portion being of sufficient height above the top face of the I-beam to elevate the bolster above the tops of the wheels.

In another embodiment, the sliding bogie trailer is a gooseneck trailer.

In another embodiment, the invention provides a semi-trailer chassis with a pair of bolster assemblies mounted on the chassis, each bolster assembly being movable between a lowered stored position below a top of the chassis and a raised operative position resting on top of the chassis.

In another embodiment of the invention, each bolster assembly in the stored positon locates between a pair of spaced-apart longitudinal rails of the chassis and in the operative position projects laterally outwardly of a longitudinal chassis rail at a side of the chassis.

In another embodiment of the invention, the trailer is a gooseneck trailer having a front gooseneck chassis part stepped upwardly relative to a rear chassis part, a top surface of the gooseneck chassis part lying in a first plane and a top surface of the rear chassis part lying in a second plane, said planes being parallel and vertically spaced-apart, wherein each bolster assembly lies at or below the second plane when the bolster assembly is in the stored position, and a top support surface of the bolster assembly lies along the first plane when the bolster assembly is in the operative position.

In another embodiment of the invention, the front trailer part comprises a pair of spaced-apart parallel longitudinal beams and a pair of swinging bolster assemblies is mounted on the front trailer part, each swinging bolster being mounted on one of said longitudinal beams, each swinging bolster comprises a swinging arm having an inner end pivotally mounted at an inside face of the longitudinal beam and an outer end carrying a connector for engagement with the container, each swinging arm being pivotally movable between a stored position between the longitudinal beams and below top surfaces of said longitudinal beams and an operating position overlying the longitudinal beam on which it is mounted and projecting laterally outwardly therefrom.

In another embodiment of the invention, each swinging arm is pivotable about an axis which is parallel to a longitudinal axis of the semi-trailer.

### Brief Description of the Drawings

The invention will be more clearly understood by the following description of some embodiments thereof, given by way of example only, with reference to the accompanying drawings, in which:
Fig. 1 is an elevational view of a prior art sliding bogie trailer, shown in a collapsed position;
Fig. 2 is an elevational view of the prior art sliding bogie trailer of Fig. 1, shown in an extended position;
Fig. 3 is a plan view of the prior art sliding bogie trailer of Fig. 1, shown in the extended position;
Fig. 4 is an elevational view of a sliding bogie trailer according to the invention, shown in a collapsed position;
Fig. 5 is an elevational view of the sliding bogie trailer of Fig. 4, shown in an extended positon;
Fig. 6 is a plan view of the sliding bogie trailer of Fig. 4, shown in the extended position;
Fig. 7 is a detail elevational view showing a rear portion of the sliding bogie trailer of Fig. 4;
Fig. 8 is an enlarged detail elevational view of the rear portion of the sliding bogie trailer of Fig. 4;
Fig. 9 is an enlarged detail elevational view of the rear portion of the sliding bogie trailer of Fig. 4;
Fig. 10 is a side elevational view of the sliding bogie trailer of Fig. 4 shown in a fully extended position carrying two 20 foot containers;
Fig. 11 is a partially sectioned elevational view of a swinging bolster assembly of the semi-trailer of Fig. 4 in an operative position; and
Fig. 12 is a view similar to Fig. 11 showing the swinging bolster assembly in a stored inoperative position.

### Detailed Description of the Preferred Embodiments

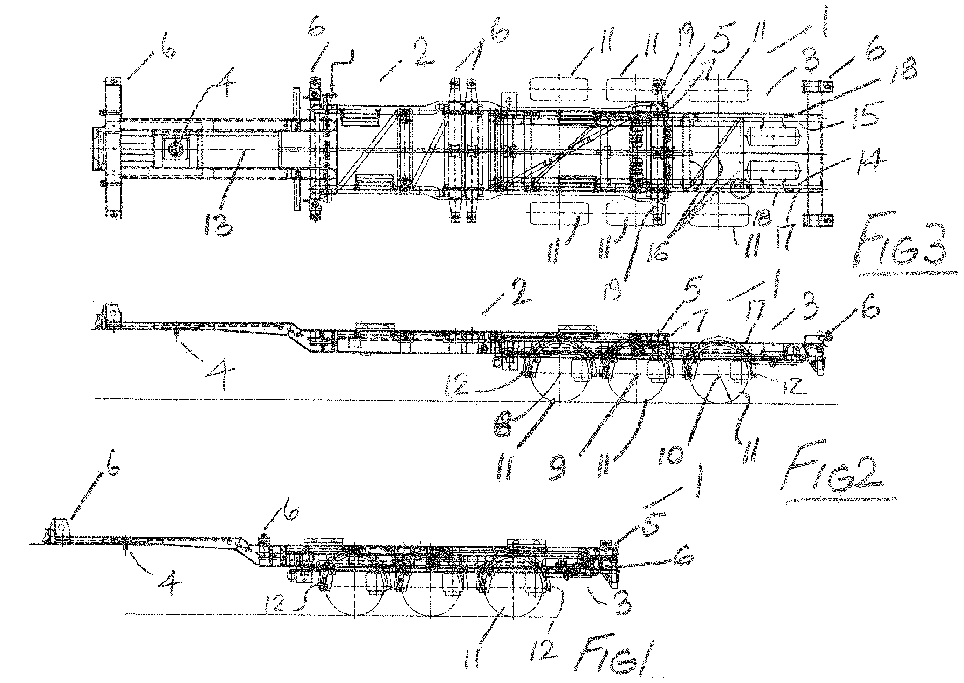

Referring initially to Figs. 1 to 3 of the drawings, there is shown a known type of semi-trailer comprising a sliding bogie trailer, indicated generally by the reference numeral 1. The sliding bogie trailer 1 has a trailer chassis comprising a front trailer part 2 and an associated rear trailer part 3 which are slidably interconnected for telescopic movement between a collapsed position, as shown in Fig. 1, and an extended position, as shown in Figs. 2 and 3, for carrying container boxes of different length on the sliding bogie trailer 1. For example, a single 20 foot, 30 foot or 40 foot container, or two 20 foot containers, could be mounted on the sliding bogie trailer 1. As illustrated in the drawings, the trailer 1 is a gooseneck trailer. A king pin 4 is mounted on the front trailer part 2, adjacent a front end of the front trailer part 2 for attachment to a tractor vehicle for towing the sliding bogie trailer 1.

A bolster assembly 5 for mounting a container on the trailer 1 is provided at a rear end 7 of the front trailer part 2. Other bolster assemblies 6 are provided on the trailer 1 for engagement with the various different containers that can be mounted on the trailer 1.

The rear trailer part 3 is telescopically movable relative to the front trailer part 2 and is mounted, in this case, on three axles, namely, a front axle 8, a middle axle 9 and a rear axle 10, each carrying ground engaging wheels 11 at opposite sides of the rear trailer part 3. Each wheel 11 has an associated mudguard assembly 12 extending about an upper portion of the wheel 11 in the usual way. For the purposes of this patent specification, such a mudguard assembly is included in the term "wheel" as used in this patent specification.

It will be noted that the bolster assembly 5 locates rearwardly of the wheels 11, when the trailer parts 2, 3 are in the collapsed position (Fig. 1), and the bolster assembly 5 locates forwardly of the wheels 11 on the rear axle 10, when the trailer parts 2, 3 are in the extended position (Fig. 2 and Fig. 3).

The rear trailer part 3 comprises a pair of spaced-apart substantially parallel longitudinal rails formed by I-beams 14, 15 interconnected by cross members 16 extending therebetween. The front trailer part 2 has a generally similar construction, that is a pair of spaced-apart longitudinal I-beams. Rollers on the front trailer part 2 engage and run along top faces 17 of upper flanges 18 of the I-beams 14, 15 for slidably interconnecting the front and rear trailer parts 2, 3.

The bolster assembly 5 has arms 19 which project laterally outwardly of each I-beam 14, 15 and have a container lock, such as a twist lock, at an outer end of each arm 19 for connection to a container when the container is mounted on the trailer.

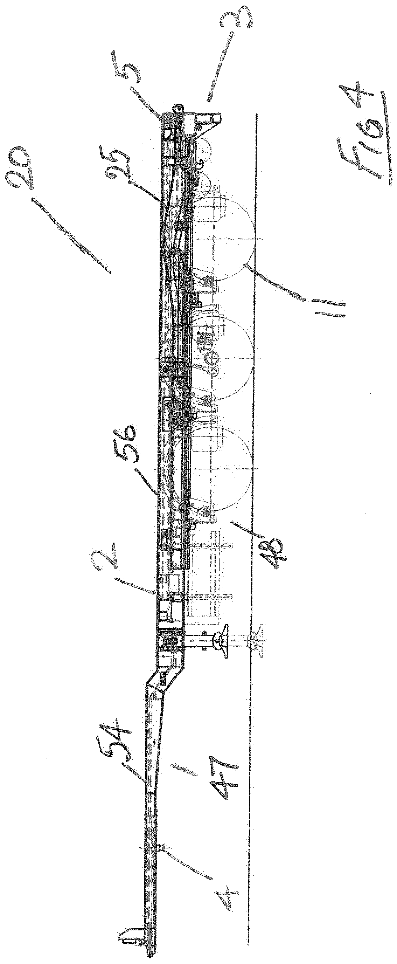

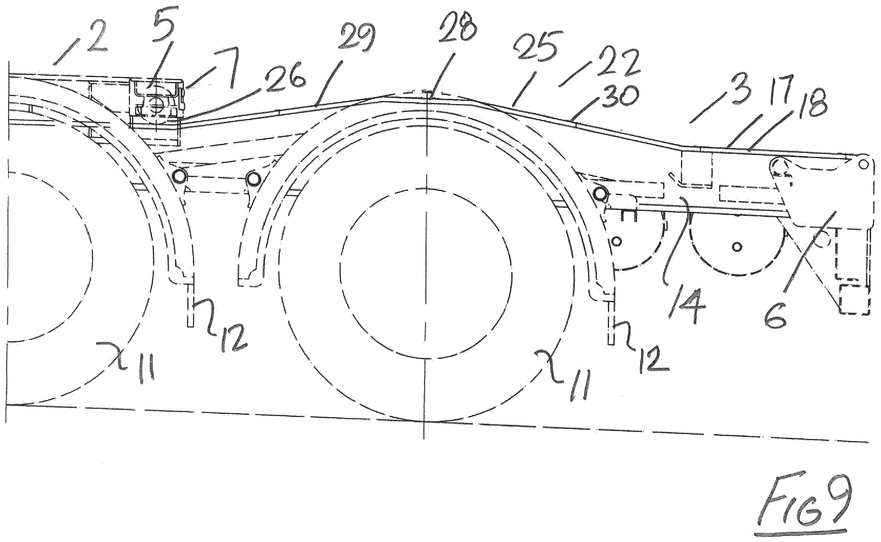

Referring now to Fig. 4 to Fig. 12, there is shown a sliding bogie semi-trailer according to the invention, indicated generally by the reference numeral 20. Parts similar to those described previously are assigned the same reference numerals. The general construction of the sliding bogie trailer 20 is similar to the construction of the sliding bogie trailer 1 described previously with reference to Figs. 1 to 3. In accordance with the present invention, however, in this case, an elevator, indicated generally by the reference numeral 22 is provided to lift the bolster 5 over the wheels 11 of the rear axle 10, as the two trailer parts 2, 3 are telescopically moved between the collapsed and extended positions. This elevator 22 is operable for vertical displacement of a rear end 7 of the front trailer part 2 on the rear trailer part 3, as the trailer parts 2, 3 move between the collapsed and extended positions, when either lengthening or shortening the trailer 20.

The elevator 22 comprises a ramp 25 on the rear trailer part 3 which is engagable by an associated roller 26 on the front trailer part 2 in order to lift the bolster 5 over the wheels 11 (including the associated mudguard assemblies 12). The roller 26 is centrally mounted on the bolster assembly 5 (that is centrally between front and rear faces of the bolster assembly 5) and projects downwardly therefrom to engage the ramp 25. Aligned ramps 25 are provided on both I-beams 14, 15 forming the rear trailer part 3, intermediate the ends of each I-beam 14, 15 on the top faces 17 of the upper flanges 18 and are engaged by associated rollers 26 mounted on the bolster assembly 5.

Each ramp 25 has a raised central portion 28 connected by front and rear sloped faces 29, 30 with a top face 17 of the I-beam 14 forming the rear trailer part 3. The central portion 28 is of sufficient height above the top face 17 to elevate the bolster assembly 5 above the tops of the wheels 11 (including the associated mudguard assemblies 12).

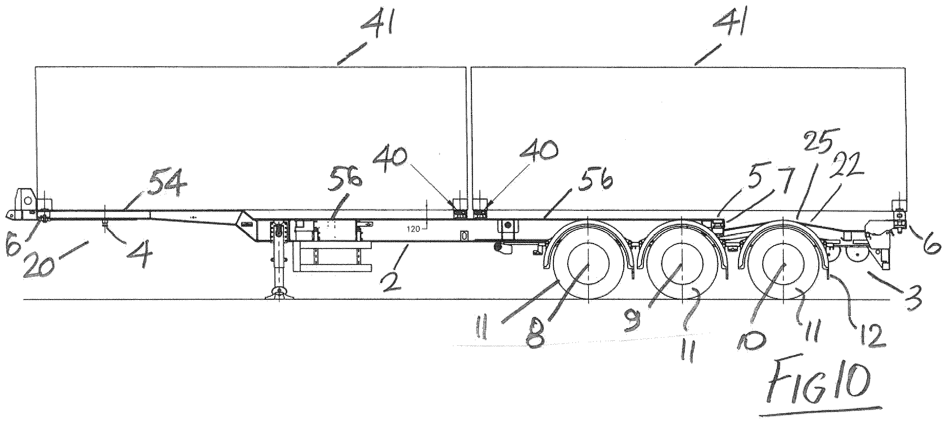

Referring now in particular to Figs. 10 to 12, a pair of swinging bolster assemblies 40 are mounted on the front trailer part 2 to allow the carriage of smaller containers, in particular 20 foot containers 41 (Fig. 10) on the semi-trailer 20. Each swinging bolster assembly 40 comprises a swinging arm 42 having an inner end 43 mounted by a pivot 44 on the front trailer part 2 and an outer end 45 carrying a connector 46 such as a twistlock for engaging and securing a container 41 on the semi-trailer 20.

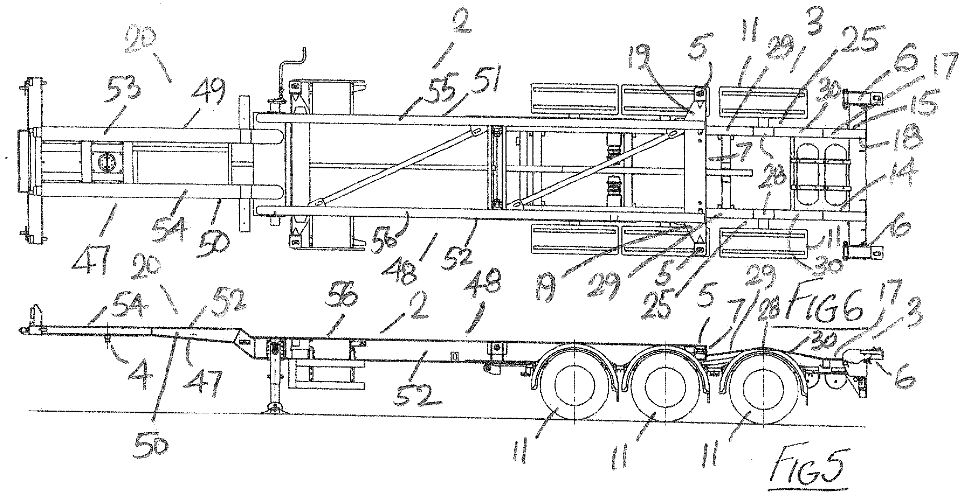

As best seen in Fig. 5 and Fig. 6, the front trailer part 2 has a front gooseneck chassis part 47 stepped upwardly relative to a rear chassis part 48. The front gooseneck part 47 has a pair of spaced-apart longitudinal chassis rails formed by front I-beams 49, 50. Similarly, the rear chassis part 48 has a pair of spaced-apart longitudinal chassis rails formed by rear I-beams 51,52. Top surfaces 53, 54 of the front I-beams 49,50 lie in a first plane and top surfaces 55, 56 of the rear I-beams 51, 52 lie in a second plane, said planes being parallel and vertically spaced-apart.

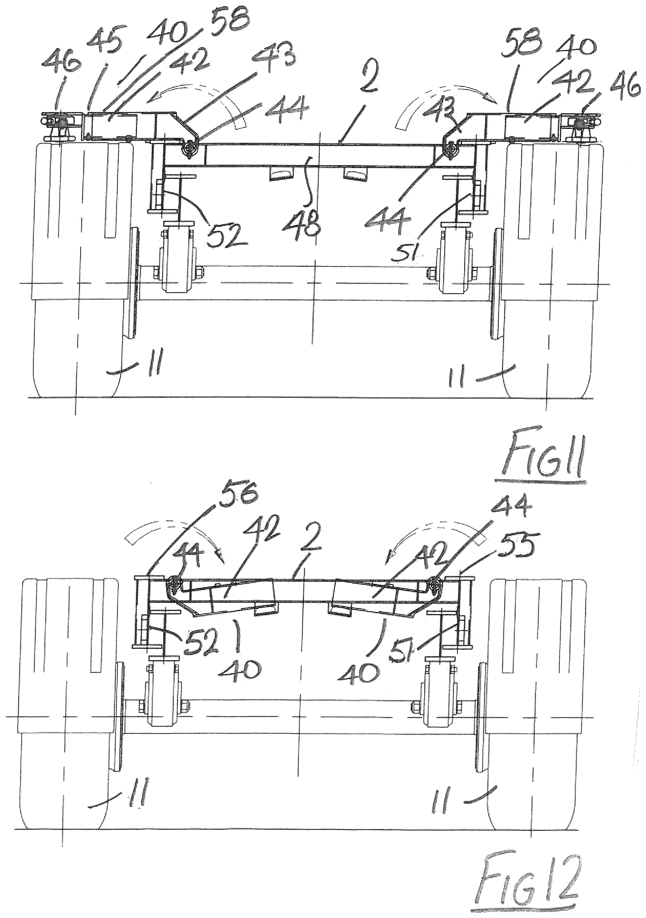

It will be noted that each swinging arm 42 is pivotally movable between a stored position (as shown in Fig. 12) within the rear I-beams 51, 52 and below top surfaces 55, 56 of the rear I-beams 51, 52 and an operative positon (as shown in Fig. 11) overlying the top surfaces 55, 56, and projecting laterally outwardly therefrom, substantially perpendicular to said rear I-beams 51, 52. When in the operative position, a container-supporting top surface 58 of each swinging arm 42 lies in the same plane as top surfaces 53, 54 of the front I-beams 49, 50 of the front gooseneck part 47 of the semi-trailer 20.

The pivot axis of each pivot 44 is substantially parallel to a longitudinal axis 13 of the semi-trailer 20. The swinging arms 42 locate below the top support surface 55, 56 of the rear chassis part 48 of the semi-trailer 20 when in the stored inoperative position so that they do not interfere with any containers carried on the semi-trailer 20. These swinging arms 42 can swing out into a raised operative position for alignment with the top support surfaces 53, 54 of the front gooseneck part 47 of the semi-trailer 20.

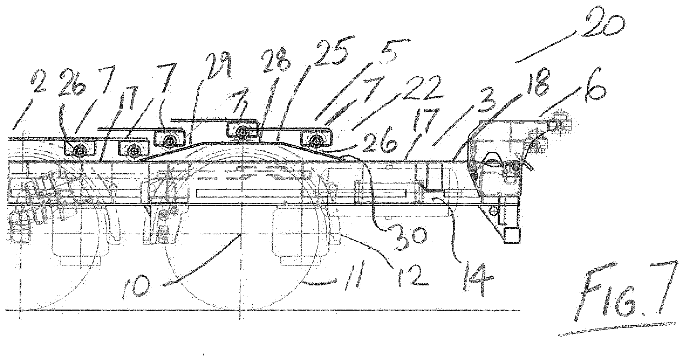

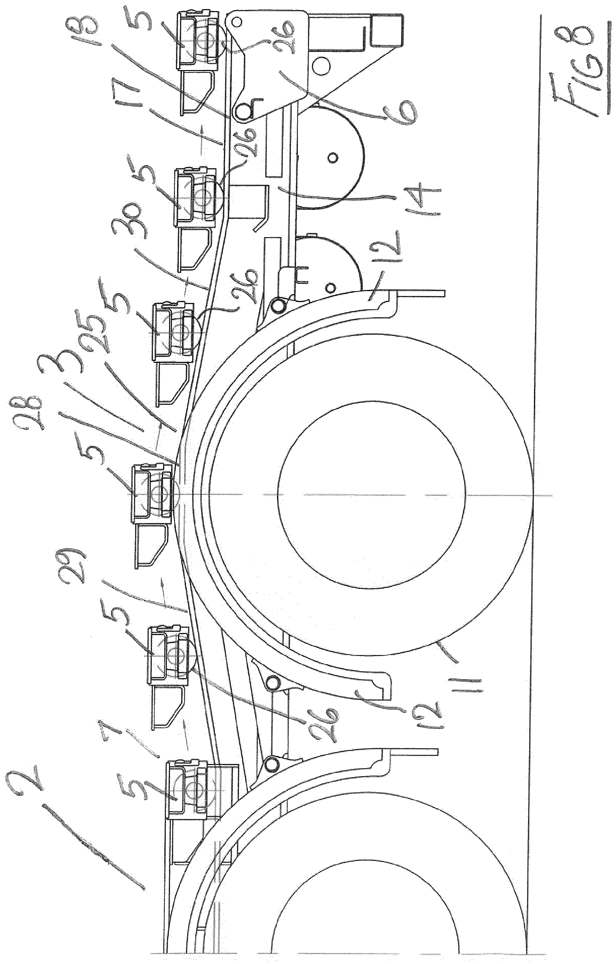

In use, when the trailer parts 2, 3 are extended and retracted, the rollers 26 roll up a sloped face 29, 30 of each ramp 25, across the central portion 28 and down the opposite sloped face 29, 30 to lift the bolster assembly 5 over the wheels 11. Fig. 7 and Fig. 8 illustrate the bolster assembly 5 in a number of positions, as the rollers 26 run up and across the ramps 25 on each I-beam 14, 15.

Although not shown in the drawings preferably a roller, low friction rubbing strip or the like is mounted at a front end of each I-beam 14, 15 of the rear trailer part 3 to engage the associated I-beams of the front trailer part 2 and prevent any binding which might be caused between the two trailer parts 2, 3 by upward movement of the front end of the rear trailer part 3 during extension and retraction of the two trailer parts 2, 3.

The embodiment of the invention described with reference to Figs. 4 to 12 shows elevator ramps 25 on each of the I-beams 14, 15 of the rear trailer part 3. However, it is envisaged that a similar affect could be achieved by mounting the ramps 25 between the two I-beams 14, 15 on a separate mounting frame.

It will be appreciated that the swinging bolster arrangement could be used in other semi-trailers too.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A sliding bogie trailer (20), having:
a front trailer part (2) and a complementary rear trailer part (3) which are slidably interconnected for movement between a collapsed position and an extended position,
the front trailer part (2) having means (4) for attachment to a tractor vehicle for towing the trailer (20),
a bolster assembly (5) for mounting a container on the trailer (20) at a rear end (7) of the front trailer part (2),
the rear trailer part (3) being telescopically movable relative to the front trailer part (2) and mounted on at least one axle (8, 9, 10) with ground engaging wheels (11),
a bottom of the bolster assembly (5) being located below a top of the wheels (11) when the trailer (20) is in the collapsed position and when the trailer (20) is in the extended position, the bolster assembly (5) being located rearwardly of the wheels (11) when the trailer parts (2, 3) are in the collapsed position and the bolster assembly (5) being located forwardly of the wheels (11) when the trailer parts (2, 3) are in the extended position,
**characterised in that** there is provided an elevator (22) to lift the bolster (5) over the wheels (11) for location either rearwardly or forwardly of the wheels (11).

2. The sliding bogie trailer (20) as claimed in claim 1 wherein the elevator (22) is operable in response to movement of the trailer parts (2, 3) between the collapsed and extended positions.

3. The sliding bogie trailer (20) as claimed in claim 1 or claim 2, wherein the elevator (22) is operable for vertical displacement of the rear end (7) of the front trailer part (2) on the rear trailer part (3) as said trailer parts (2, 3) move between the collapsed and extended positions.

4. The sliding bogie trailer (20) as claimed in any preceding claim, wherein the elevator (22) comprises a ramp (25) on one trailer part (3) which is engagable by the other trailer part (2).

5. The sliding bogie trailer (20) as claimed in claim 4, wherein the elevator (22) comprises a ramp (25) on the rear trailer part (3) which is engagable by the front trailer part (2).

6. The sliding bogie trailer (20) as claimed in claim 4 or claim 5, wherein the elevator (22) comprises a roller (26) on the other trailer part which is engagable with the ramp (25).

7. The sliding bogie trailer (20) as claimed in claim 6, wherein the roller (26) is mounted on the bolster assembly (5).

8. The sliding bogie trailer (20) as claimed in claim 7, wherein the roller (26) is centrally mounted on the bolster assembly (5).

9. The sliding bogie trailer (20) as claimed in any preceding claim, wherein the rear trailer part (3) comprises a pair of spaced-apart substantially parallel longitudinal I-beams (14, 15) interconnected by cross members (16) extending therebetween, rollers on the front trailer part (2) engaging and running along top faces of upper flanges of said I-beams (14, 15) for slidably interconnecting the front (2) and rear (3) trailer parts, a ramp (25) projecting upwardly from the top face of each I-beam (14, 15) intermediate the ends thereof, each ramp (25) having a raised central portion (28) connected by front and rear sloped faces (29, 30) with the top face (17) of the I-beam (14, 15), said central portion (28) being of sufficient height above the top face (17) of the I-beam (14, 15) to elevate the bolster (5) above the tops of the wheels (11).

10. The sliding bogie trailer (20) as claimed in any preceding claim, wherein the sliding bogie trailer is a gooseneck trailer.

11. The sliding bogie trailer (20) as claimed in any preceding claim wherein a pair of bolster assemblies are mounted on the chassis (51,52) of the front trailer part (2), each bolster assembly (40) being movable between a lowered stored position below a top (55, 56) of the chassis (51, 52) and a raised operative position resting on top of the chassis (51, 52).

12. The sliding bogie trailer (20) as claimed in claim 11 wherein each bolster assembly (40) in the stored positon locates between a pair of spaced-apart longitudinal rails (51, 52) of the chassis and in the operative position projects laterally outwardly of a longitudinal chassis rail (51, 52) at a side of the chassis.

13. The sliding bogie trailer (20) as claimed in claim 11 or claim 12 wherein the trailer is a gooseneck trailer having a front gooseneck chassis part (47) stepped upwardly relative to a rear chassis part (48), a top surface (53, 54) of the gooseneck chassis part (47) lying in a first plane and a top surface (55,56) of the rear chassis part (48) lying in a second plane, said planes being parallel and vertically spaced-apart, wherein each bolster assembly (40) lies at or below the second plane (55, 56) when the bolster assembly (40) is in the stored position, and a top support surface (58) of the bolster assembly (40) lies along the first plane (53, 54) when the bolster assembly (40) is in the operative position.

14. The sliding bogie trailer (20) as claimed in any preceding claim wherein the front trailer part (2) comprises a pair of spaced-apart parallel longitudinal beams (51, 52) and a pair of swinging bolster assemblies (40) is mounted on the front trailer part (2), each swinging bolster (40) being mounted on one of said longitudinal beams (51, 52), each swinging bolster (40) comprises a swinging arm (42) having an inner end (43) pivotally mounted (44) at an inside face of the longitudinal beam (51, 52) and an outer end (45) carrying a connector (46) for engagement with the container, each swinging arm (42) being pivotally movable between a stored position between the longitudinal beams (51, 52) and below top surfaces (55, 56) of said longitudinal beams (51, 52) and an operating position overlying the longitudinal beam (51, 52) on which it is mounted and projecting laterally outwardly therefrom.

15. The sliding bogie trailer (20) as claimed in claim 14 wherein each swinging arm (42) is pivotable about an axis which is parallel to a longitudinal axis of the semi-trailer (20).

## Patentansprüche

1. Anhänger (20) mit verschiebbarem Drehgestell, der Folgendes aufweist:
einen vorderen Anhängerteil (2) und einen komplementären hinteren Anhängerteil (3), die zur Bewegung zwischen einer eingefahrenen Stellung und einer ausgefahrenen Stellung verschiebbar miteinander verbunden sind,
wobei der vordere Anhängerteil (2) Mittel (4) zum Befestigen an einem Zugfahrzeug zum Schleppen des Anhängers (20) aufweist,
eine Auflageanordnung (5) zum Anbringen eines Containers auf dem Anhänger (20) an einem hinteren Ende (7) des vorderen Anhängerteils (2),
wobei der hintere Anhängerteil (3) relativ zu dem vorderen Anhängerteil (2) teleskopisch bewegbar ist und auf mindestens einer Achse (8, 9, 10) mit den Boden berührenden Rädern (11) angebracht ist,
wobei sich eine Unterkante der Auflageanordnung (5) unterhalb einer Oberkante der Räder (11) befindet, wenn sich der Anhänger (20) in der eingefahrenen Stellung befindet und wenn sich der Anhänger (20) in der ausgefahrenen Stellung befindet, wobei sich die Auflageanordnung (5) hinter den Rädern (11) befindet, wenn sich die Anhängerteile (2, 3) in der eingefahrenen Stellung befinden, und sich die Auflageanordnung (5) vor den Rädern (11) befindet, wenn sich die Anhängerteile (2, 3) in der ausgefahrenen Stellung befinden,
**dadurch gekennzeichnet, dass** eine Hebevorrichtung (22) vorgesehen ist, um die Auflage (5) zur Platzierung entweder vor oder hinter den Rädern (11) über die Räder (11) zu heben.

2. Anhänger (20) mit verschiebbarem Drehgestell nach Anspruch 1, wobei die Hebevorrichtung (22) als Reaktion auf die Bewegung der Anhängerteile (2, 3) zwischen der eingefahrenen und der ausgefahrenen Stellung wirksam ist.

3. Anhänger (20) mit verschiebbarem Drehgestell nach Anspruch 1 oder Anspruch 2, wobei die Hebevorrichtung (22) zur vertikalen Verlagerung des hinteren Endes (7) des vorderen Anhängertieils (2) auf dem hinteren Anhängerteil (3) dient, wenn sich die Anhängerteile (2, 3) zwischen der eingefahrenen und der ausgefahrenen Stellung bewegen.

4. Anhänger (20) mit verschiebbarem Drehgestell nach einem der vorangehenden Ansprüche, wobei die Hebevorrichtung (22) eine Rampe (25) auf einem Anhängerteil (3) umfasst, mit der der andere Anhängerteil (2) in Eingriff treten kann.

5. Anhänger (20) mit verschiebbarem Drehgestell nach Anspruch 4, wobei die Hebevorrichtung (22) eine Rampe (25) auf dem hinteren Anhängerteil (3) umfasst, mit der der vordere Anhängerteil (2) in Eingriff treten kann.

6. Anhänger (20) mit verschiebbarem Drehgestell nach Anspruch 4 oder Anspruch 5, wobei die Hebevorrichtung (22) eine Rolle (26) an dem anderen Anhängerteil umfasst, die mit der Rampe (25) in Eingriff treten kann.

7. Anhänger (20) mit verschiebbarem Drehgestell nach Anspruch 6, wobei die Rolle (26) an der Auflageanordnung (5) angebracht ist.

8. Anhänger (20) mit verschiebbarem Drehgestell nach Anspruch 7, wobei die Rolle (26) mittig an der Auflageanordnung (5) angebracht ist.

9. Anhänger (20) mit verschiebbarem Drehgestell nach einem der vorangehenden Ansprüche, wobei der hintere Anhängerteil (3) ein Paar beabstandete, im Wesentlichen parallele längslaufende I-Träger (14, 15) umfasst, die durch sich dazwischen erstreckende Querträger (16) miteinander verbunden sind, wobei sich Rollen an dem vorderen Anhängerteil (2) mit Oberseiten oberer Flansche der I-Träger (14, 15) im Eingriff befinden und entlang diesen laufen, um den vorderen (2) und den hinteren (3) Anhängerteil verschiebbar miteinander zu verbinden, wobei eine Rampe (25) von der Oberseite jedes I-Trägers (14, 15) zwischen den Enden desselben nach oben vorsteht, wobei jede Rampe (25) einen erhöhten mittleren Abschnitt (28) aufweist, der durch eine vordere und eine hintere schiefe Ebene (29, 30) mit der Oberseite (17) des I-Trägers (14, 15) verbunden ist, wobei der mittlere Abschnitt (28) eine ausreichende Höhe über der Oberseite (17) des I-Trägers (14, 15) aufweist, um die Auflage (5) über die Oberkanten den Räder (11) zu heben.

10. Anhänger (20) mit verschiebbarem Drehgestell nach einem der vorangehenden Ansprüche, wobei es sich bei dem Anhänger mit verschiebbarem Drehgestell um einen Schwanenhals-Anhänger handelt.

11. Anhänger (20) mit verschiebbarem Drehgestell nach einem der vorangehenden Ansprüche, wobei ein Paar Auflageanordnungen an dem Fahrgestell (51, 52) des vorderen Anhängerteils (2) angebracht sind, wobei jede Auflageanordnung (40) zwischen einer abgesenkten Aufbewahrungsstellung unterhalb einer Oberkante (55, 56) des Fahrgestells (51, 52) und einer erhöhten wirksamen Stellung, in der sie zuoberst auf dem Fahrgestell (51, 52) aufliegt, bewegbar ist.

12. Anhänger (20) mit verschiebbarem Drehgestell nach Anspruch 11, wobei jede Auflageanordnung (40) in der Aufbewahrungsstellung zwischen einem Paar beabstandeter Längsriegel (51, 52) des Fahrgestells sitzt und in der wirksamen Stellung gegenüber einem Fahrgestell-Längsriegel (51, 52) an einer Seite des Fahrgestells seitlich nach außen vorsteht.

13. Anhänger (20) mit verschiebbarem Drehgestell nach Anspruch 11 oder Anspruch 12, wobei es sich bei dem Anhänger um einen Schwanenhals-Anhänger handelt, der einen vorderen Schwanenhals-Fahrgestellteil (47) aufweist, der relativ zu einem hinteren Fahrgestellteil (48) stufenartig erhöht ist, wobei eine obere Oberfläche (53, 54) des Schwanenhals-Fahrgestellteils (47) in einer ersten Ebene liegt und eine obere Oberfläche (55, 56) des hinteren Fahrgestellteils (48) in einer zweiten Ebene liegt, wobei die Ebenen parallel und vertikal voneinander beabstandet sind, wobei jede Auflageanordnung (40) in oder unterhalb von der zweiten Ebene (55, 56) liegt, wenn sich die Auflageanordnung (40) in der Aufbewahrungsstellung befindet, und eine obere Stützfläche (58) der Auflageanordnung (40) entlang der ersten Ebene (53, 54) liegt, wenn sich die Auflageanordnung (40) in der wirksamen Stellung befindet.

14. Anhänger (20) mit verschiebbarem Drehgestell nach einem der vorangehenden Ansprüche, wobei der vordere Anhängerteil (2) ein Paar beabstandete parallele Längsträger (51, 52) umfasst und ein Paar schwenkbare Auflageanordnungen (40) an dem vorderen Anhängerteil (2) angebracht ist, wobei jede schwenkbare Auflage (40) an einem der Längsträger (51, 52) angebracht ist, wobei jede schwenkbare Auflage (40) einen Schwenkarm (42) mit einem an einer Innenseite des Längsträgers (51, 52) drehbar angebrachten (44) inneren Ende (43) und einem äußeren Ende (45), das einen Verbinder (46) für den Eingriff mit dem Container trägt, umfasst, wobei jeder Schwenkarm (42) zwischen einer Aufbewahrungsstellung zwischen den Längsträgern (51, 52) und unterhalb von oberen Oberflächen (55, 56) der Längsträger (51, 52) und einer Betriebsstellung, in der er über dem Längsträger (51, 52), an dem er angebracht ist, liegt und seitlich davon nach außen vorsteht, drehbar bewegbar ist.

15. Anhänger (20) mit verschiebbarem Drehgestell nach Anspruch 14, wobei jeder Schwenkarm (42) um eine Achse drehbar ist, die zu einer Längsachse des Aufliegers (20) parallel ist.

## Revendications

1. Remorque à train roulant coulissant (20), comprenant :
une partie de remorque avant (2) et une partie de remorque arrière complémentaire (3) qui sont mutuellement raccordées de manière coulissante pour un mouvement entre une position pliée et une position étendue,
la partie de remorque avant (2) comprenant des moyens (4) pour la fixation à un véhicule tracteur pour remorquer la remorque (20),
un ensemble traverse pivot (5) pour le montage d'un conteneur sur la remorque (20) au niveau d'une extrémité arrière (7) de la partie de remorque avant (2),
la partie de remorque arrière (3) étant mobile de façon télescopique par rapport à la partie de remorque avant (2) et montée sur au moins un essieu (8, 9, 10) avec des roues de mise en contact avec la terre (11),
un fond de l'ensemble traverse pivot (5) étant situé sous un sommet des roues (11) lorsque la remorque (20) est dans la position pliée et lorsque la remorque (20) est dans la position étendue, l'ensemble traverse pivot (5) étant situé vers l'arrière des roues (11) lorsque les parties de remorque (2, 3) sont dans la position pliée et l'ensemble traverse pivot (5) étant situé vers l'avant des roues (11) lorsque les parties de remorque (2, 3) sont dans la position étendue,
**caractérisée en ce qu'**un ascenseur (22) est fourni pour lever la traverse pivot (5) au-dessus des roues (11) pour être positionnée soit vers l'arrière soit vers l'avant des roues (11).

2. Remorque à train roulant coulissant (20) selon la revendication 1 dans laquelle l'ascenseur (22) peut fonctionner en réponse à un mouvement des parties de remorque (2, 3) entre les positions pliée et étendue.

3. Remorque à train roulant coulissant (20) selon la revendication 1 ou la revendication 2, dans laquelle l'ascenseur (22) peut fonctionner pour un déplacement vertical de l'extrémité arrière (7) de la partie de remorque avant (2) sur la partie de remorque arrière (3) lorsque lesdites parties de remorque (2, 3) se déplacent entre les positions pliée et étendue.

4. Remorque à train roulant coulissant (20) selon l'une quelconque des revendications précédentes, dans laquelle l'ascenseur (22) comprend une rampe (25) sur une partie de remorque (3) qui peut être mise en prise par l'autre partie de remorque (2).

5. Remorque à train roulant coulissant (20) selon la revendication 4, dans laquelle l'ascenseur (22) comprend une rampe (25) sur la partie de remorque arrière (3) qui peut être mise en prise par la partie de remorque avant (2).

6. Remorque à train roulant coulissant (20) selon la revendication 4 ou la revendication 5, dans laquelle l'ascenseur (22) comprend un rouleau (26) sur l'autre partie de remorque qui peut entrer en prise avec la rampe (25).

7. Remorque à train roulant coulissant (20) selon la revendication 6, dans laquelle le rouleau (26) est monté sur l'ensemble traverse pivot (5).

8. Remorque à train roulant coulissant (20) selon la revendication 7, dans laquelle le rouleau (26) est monté centralement sur l'ensemble traverse pivot (5).

9. Remorque à train roulant coulissant (20) selon l'une quelconque des revendications précédentes, dans laquelle la partie de remorque arrière (3) comprend une paire de poutres en I longitudinales sensiblement parallèles espacées (14, 15) mutuellement raccordées par des entretoises (16) s'étendant entre elles, des rouleaux sur la partie de remorque avant (2) entrant en prise et s'étendant le long de faces supérieures de brides supérieures desdites poutres en I (14, 15) pour un raccordement mutuel coulissant des parties de remorque avant (2) et arrière (3), une rampe (25) faisant saillie vers le haut à partir de la face supérieure de chaque poutre en I (14, 15) de manière intermédiaire aux extrémités de celle-ci, chaque rampe (25) comprenant une partie centrale surélevée (28) raccordée par des faces inclinées avant et arrière (29, 30) avec la face supérieure (17) de la poutre en I (14, 15), ladite partie centrale (28) étant d'une hauteur suffisante au-dessus de la face supérieure (17) de la poutre en I (14, 15) pour élever la traverse pivot (5) au-dessus des sommets des roues (11).

10. Remorque à train roulant coulissant (20) selon l'une quelconque des revendications précédentes, dans laquelle la remorque à train roulant coulissant est une remorque du type col de cygne.

11. Remorque à train roulant coulissant (20) selon l'une quelconque des revendications précédentes dans laquelle une paire d'ensembles traverse pivot est montée sur le châssis (51, 52) de la partie de remorque avant (2), chaque ensemble traverse pivot (40) étant mobile entre une position stockée inférieure sous un sommet (55, 56) du châssis (51, 52) et une position fonctionnelle surélevée reposant sur un sommet du châssis (51, 52).

12. Remorque à train roulant coulissant (20) selon la revendication 11 dans laquelle chaque ensemble traverse pivot (40) dans la position stockée se situe entre une paire de rails longitudinaux espacés (51, 52) du châssis et dans la position fonctionnelle fait saillie latéralement vers l'extérieur d'un rail de châssis longitudinal (51, 52) au niveau d'un côté du châssis.

13. Remorque à train roulant coulissant (20) selon la revendication 11 ou la revendication 12 dans laquelle la remorque est une remorque du type col de cygne comprenant une partie de châssis du type col de cygne avant (47) étagée vers le haut par rapport à une partie de châssis arrière (48), une surface supérieure (53, 54) de la partie de châssis du type col de cygne (47) reposant dans un premier plan et une surface supérieure (55, 56) de la partie de châssis arrière (48) reposant dans un second plan, lesdits plans étant parallèles et verticalement espacés, dans laquelle chaque ensemble traverse pivot (40) repose au niveau du ou sous le second plan (55, 56) lorsque l'ensemble traverse pivot (40) est dans la position stockée, et une surface de support supérieure (58) de l'ensemble traverse pivot (40) repose le long du premier plan (53, 54) lorsque l'ensemble traverse pivot (40) est dans la position fonctionnelle.

14. Remorque à train roulant coulissant (20) selon l'une quelconque des revendications précédentes dans laquelle la partie de remorque avant (2) comprend une paire de poutres longitudinales parallèles espacées (51, 52) et une paire d'ensembles traverses pivot oscillantes (40) est montée sur la partie de remorque avant (2), chaque traverse pivot oscillante (40) étant montée sur l'une desdites poutres longitudinales (51, 52), chaque traverse pivot oscillante (40) comprend un bras oscillant (42) comprenant une extrémité interne (43) montée de façon pivotante (44) au niveau d'une face intérieure de la poutre longitudinale (51, 52) et une extrémité externe (45) portant un raccord (46) pour entrer en prise avec le conteneur, chaque bras oscillant (42) étant mobile de façon pivotante entre une position stockée entre les poutres longitudinales (51, 52) et sous des surfaces supérieures (55, 56) desdites poutres longitudinales (51, 52) et une position fonctionnelle recouvrant la poutre longitudinale (51, 52) sur laquelle elle est montée et faisant saillie latéralement vers l'extérieur à partir de celle-ci.

15. Remorque à train roulant coulissant (20) selon la revendication 14 dans laquelle chaque bras oscillant (42) est pivotant autour d'un axe qui est parallèle à un axe longitudinal de la semi-remorque (20).
